# FASCICULE DE BREVET EUROPEEN

(11) **EP 2 742 585 B1**
(45) Date de publication et mention de la délivrance du brevet: **18.05.2016**
(21) Numéro de dépôt: 12741011.6
(22) Date de dépôt: 01.08.2012
(51) Int. Cl.: H02M 3/335

(54) **CONVERTISSEUR AC/DC A ISOLEMENT GALVANIQUE ET CORRECTEUR DE SIGNAL**
AC/DC-WANDLER MIT GALVANISCHER ISOLIERUNG UND SIGNALKORREKTOR
AC/DC CONVERTER WITH GALVANIC INSULATION AND SIGNAL CORRECTOR

(30) Priorité: 12.08.2011 FR 1157335
(43) Date de publication de la demande: 18.06.2014
(73) Titulaire: SAGEM DEFENSE SECURITE, 92100 Boulogne Billancourt (FR)
(72) Inventeur: KITTEL RIES, Lisandra, F-92100 Boulogne-Billancourt (FR); PONTRUCHER, Marc, F-92100 Boulogne-Billancourt (FR); DOMBLIDES, Nicolas, F-92100 Boulogne-Billancourt (FR); FOURMONT, Tony, F-92100 Boulogne-Billancourt (FR)
(74) Mandataire: Lavialle, Bruno François Stéphane
(86) Numéro de dépôt international: PCT/EP2012/065071
(87) Numéro de publication internationale: WO 2013/023925

(56) Documents cités:
- FR-A1- 2 925 790
- GB-A- 2 460 272
- JP-A- 2010 051 107
- HERNAN EMILIO TACCA: "Single-Switch Two-Output Flyback-Forward Converter Operation", IEEE TRANSACTIONS ON POWER ELECTRONICS, IEEE SERVICE CENTER, PISCATAWAY, NJ, US, vol. 13, no. 5, 1 septembre 1998 (1998-09-01), XP011043221, ISSN: 0885-8993

## Description

La présente invention concerne un convertisseur alternatif / continu à isolement galvanique utilisable par exemple sur le réseau de distribution électrique d'un aéronef.

Dans un avion, l'énergie électrique est fournie par un alternateur entraîné par le moteur de l'avion. L'alternateur délivre une tension alternative convertie en tension continue pour être exploitée par les équipements électriques embarqués dans l'avion. Dans sa version la plus simplifiée, la conversion est réalisée au moyen d'un transformateur comportant un enroulement primaire relié à l'alternateur et un enroulement secondaire relié à un pont redresseur associé à un condensateur de filtrage. La tension en sortie du pont redresseur est en sinusoïde double alternance tandis que le courant consommé est soumis à une forte distorsion qui provoque une baisse du rendement du transformateur et de l'alternateur, un échauffement des conducteurs et un rayonnement électromagnétique à haute fréquence source de parasites.

Un moyen pour remédier à cet inconvénient est de réaliser un filtrage en série sur le circuit primaire du transformateur. Toutefois, cette option n'est pas adaptée lorsque la fréquence de la tension alternative est variable, comme dans le cas d'un alternateur entraîné par une turbine de réacteur pour lequel la fréquence varie de 360 Hz à 800 Hz environ.

Il est également connu de recourir à un circuit de correction de facteur de puissance ou PFC ( power factor corrector ) pour réduire la distorsion en forçant le courant consommé à suivre une forme d'onde identique à celle de la tension d'entrée, à savoir une sinusoïde redressée double alternance.

Il existe différentes structures de PFC.

Dans la structure de type BOOST, le circuit ne comporte pas d'isolement galvanique obligeant à associer à ce circuit un convertisseur continu / continu assurant cette fonction. Cet ensemble présente un rendement total relativement faible, ainsi qu'un encombrement et un poids élevés.

Dans la structure de type FLYBACK, le circuit comprend un transformateur d'isolement dont les enroulements primaire et secondaire sont de sens opposés. Le fonctionnement des circuits PFC de ce type entraîne périodiquement le stockage d'une grande quantité d'énergie dans le noyau magnétique du transformateur. Il est donc nécessaire d'utiliser de gros transformateurs pour les fortes puissances, ce qui augmente la masse et l'encombrement du circuit.

Dans la structure de type FORWARD, le circuit comprend également un transformateur d'isolement mais dont les enroulements primaire et secondaire sont de même sens. Dans ce type de circuit, il n'est pas possible d'exploiter le courant sur la totalité de la sinusoïde obtenue et donc de consommer un courant suivant la forme d'onde de la tension d'entrée.

Il a été proposé dans le document FR-A-2925790 une structure de convertisseur alternatif / continu ayant des performances améliorées, comportant un transformateur d'isolement ayant un enroulement primaire relié à un commutateur de découpage piloté par un circuit de commande par modulation de largeur d'impulsion ou PWM, un premier enroulement secondaire qui est de sens identique à l'enroulement primaire et qui est relié à une ligne de sortie du convertisseur via une diode et une bobine de filtrage, et un deuxième enroulement secondaire qui a un sens opposé à l'enroulement primaire et qui est directement relié à la ligne de sortie via une diode. Ainsi, pour les tensions moyennes à fortes, l'énergie est transmise vers la sortie via le premier enroulement secondaire, la diode et la bobine de filtrage. Ceci permet de faire passer de fortes puissances. Lorsque la tension est faible, l'énergie emmagasinée dans le noyau magnétique du transformateur peut être transmise, à l'ouverture du commutateur de découpage, vers un condensateur de sortie de la ligne de sortie via le deuxième enroulement secondaire et la diode y raccordée. Le deuxième enroulement secondaire permet donc d'évacuer l'énergie stockée dans le noyau magnétique vers la sortie et évite un gaspillage d'énergie. Il permet aussi d'assurer une consommation d'énergie, utilisée par la sortie, pour les tensions faibles (partie basse amplitude de la sinusoïde). De plus, le flux résiduel présent dans le noyau à l'ouverture du commutateur de découpage excite le deuxième enroulement secondaire qui évacue l'énergie correspondante vers la sortie, minimisant ainsi l'apparition de surtensions à l'ouverture du commutateur de découpage, surtensions qui risqueraient de détériorer le commutateur de découpage. Un seul étage de conversion permet ainsi de réaliser l'isolement galvanique et une fonction PFC de manière simple, fiable et efficace grâce à un rendement relativement élevé.

Le document "Single-Switch Two-Output Flyback-Forward Converter Operation" de E.Tacca dans IEEE Transactions on Power Electronics, Vol. 13, No 5, September 1988 propose une structure de convertisseur alternativ/continue de l'état de la technique similaire à celui illustré par le document FR-A-2925790.

Si les avantages de cette solution sont évidents, elle présente néanmoins en pratique l'inconvénient d'être difficilement compatible avec un régulateur PWM-PFC fonctionnant en mode courant-crête. En effet,pour les tensions faibles, lorsque seul le deuxième enroulement primaire conduit, le courant primaire a une forme triangulaire (caractéristique d'un fonctionnement de type FLYBACK) parfaitement adaptée à un tel mode de fonctionnement. En revanche, pour les tensions moyennes à fortes, les deux enroulements secondaires conduisent successivement, ce qui se traduit par un courant primaire en forme de trapèze résultant de la superposition de la forme en triangle caractéristique du fonctionnement de type FLYBACK et de la forme presque carrée caractéristique d'un fonctionnement de type FORWARD. Or, cette forme en trapèze est préjudiciable au fonctionnement optimal d'un tel régulateur (conformément à la norme DO-160).

Un but de l'invention est de fournir un convertisseur ne présentant pas l'inconvénient ci-dessus.

A cet effet, on prévoit, selon l'invention, un convertisseur alternatif / continu, comportant en entrée un circuit redresseur raccordé en série à un enroulement primaire d'un transformateur d'isolement et à un commutateur de découpage piloté par un circuit de commande par modulation de largeur d'impulsion à partir d'un signal représentatif d'un courant primaire, le transformateur d'isolement comprenant un premier enroulement secondaire qui est de sens identique à l'enroulement primaire et qui est relié à une ligne de sortie du convertisseur via une diode et une bobine de filtrage, et un deuxième enroulement secondaire qui a un sens opposé à l'enroulement primaire et qui est relié directement à la ligne de sortie via une diode, la ligne de sortie étant reliée à un condensateur de sortie. Le convertisseur comprend un circuit analogique de correction du courant primaire, qui est relié au circuit de commande et à un élément de mesure fournissant un signal représentatif du courant primaire, et qui est agencé pour transformer ledit signal en un signal triangulaire apte au pilotage du circuit de commande.

Ainsi, le circuit analogique de correction permet un fonctionnement optimal du circuit de commande en lui envoyant un signal triangulaire au lieu du signal trapézoïdal qui serait normalement fourni au circuit de commande.

Selon un mode de réalisation particulier, le circuit analogique de correction comprend une ligne principale sur laquelle sont montés en série, successivement, une première résistance, un premier commutateur, une deuxième résistance et le circuit de commande de commande, un premier condensateur étant relié, d'une part, à la ligne principale entre la première résistance et le premier commutateur et, d'autre part, à la masse, un deuxième commutateur étant relié, d'une part, à la ligne principale entre la deuxième résistance et le circuit de commande et, d'autre part, à une troisième résistance également reliée à la masse, un deuxième condensateur étant relié, d'une part, à la ligne principale entre la liaison au deuxième commutateur et le circuit de commande et, d'autre part, à la masse.

Ce mode de réalisation est particulièrement simple.

D'autres caractéristiques et avantages de l'invention ressortiront à la lecture de la description qui suit d'un mode de réalisation particulier non limitatif de l'invention.

Il sera fait référence aux dessins annexés, parmi lesquels :
- la figure 1 représente schématiquement le circuit d'un convertisseur conforme à l'invention,
- la figure 2 est une vue de détail du module de correction.

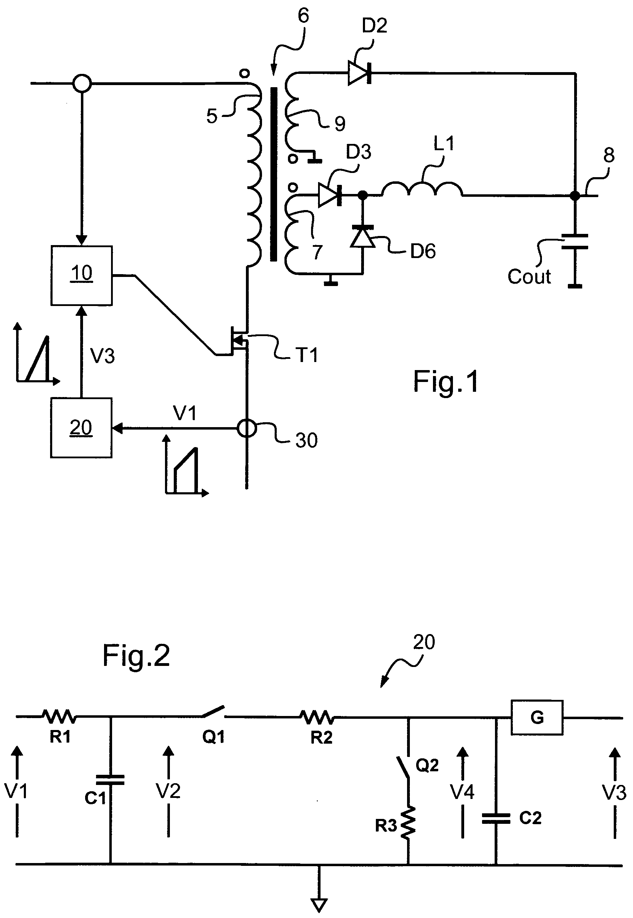

En référence à la figure 1, le convertisseur conforme à l'invention est destiné à être raccordé, en entrée, à un réseau de distribution électrique de courant alternatif et, en sortie, à au moins un équipement électronique fonctionnant en courant continu.

Ce convertisseur est globalement conforme à celui décrit dans le document FR-A-2925790 de sorte que seules seront détaillées les parties de celui-ci dont la description est nécessaire à la compréhension de la présente invention.

Le convertisseur comprend en entrée un circuit de filtrage relié à des bornes d'entrée d'un circuit redresseur. Le circuit de filtrage et le circuit redresseur sont connus en eux-mêmes et non représentés.

Le circuit redresseur comporte un pont de diodes ayant une première borne de sortie reliée à un shunt de mesure de courant et une deuxième borne de sortie reliée, d'une part, à un pont diviseur d'entrée et, d'autre part, à un enroulement primaire 5 d'un transformateur d'isolement 6 en série avec un commutateur de découpage Tl. Le commutateur de découpage Tl est un transistor de puissance tel qu'un transistor à effet de champ à grille métal-oxyde ou MOSFET ou un transistor bipolaire à grille isolée ou IGBT. Le commutateur de découpage Tl est relié à un circuit de commande ou, plus précisément, circuit de commande de découpage 10 qui sera décrit ci-après. Le transformateur d'isolement 6 possède un premier enroulement secondaire 7 qui est de sens identique à l'enroulement primaire 5 et qui est relié en série à une ligne de sortie 8 du convertisseur via une diode D3 et une bobine de filtrage (couramment appelée inductance) L1. Une diode de roue libre D6 relie la masse à la bobine de filtrage L1 de façon connue en soi pour assurer la continuité du courant lorsque la diode D3 ne conduit pas (restitution de l'énergie par la bobine de filtrage L1).

Le transformateur d'isolement 6 possède un deuxième enroulement secondaire 9 qui a un sens opposé à l'enroulement primaire 5 et qui est relié via une diode D2 directement à la ligne de sortie 8, c'est-à-dire en aval le la bobine L1.

A la ligne de sortie 8, sont en outre reliés un condensateur de sortie Cout et un pont diviseur de sortie non représenté.

Le circuit de commande de découpage 10 est un circuit de commande par modulation de largeur d'impulsion, dont la structure et le fonctionnement sont connus en eux-mêmes, agencé pour commander le commutateur de découpage Tl en fonction d'une comparaison d'une tension image d'un courant consommé en entrée du convertisseur avec un signal en forme de sinusoïde redressée double alternance ayant une amplitude dépendant d'une tension d'erreur entre une tension de sortie du convertisseur et une tension de référence.

Le circuit de commande de découpage 10 est piloté notamment en fonction du courant primaire mesuré en aval du commutateur de découpage T1. Le circuit de commande de découpage est relié à cette fin à un circuit analogique de correction 20 qui lui fournit un signal V3 image du courant primaire obtenu à partir d'un signal V1 représentatif du courant primaire fourni par un élément de mesure symbolisé en 30 sur la figure 1.

Le circuit analogique de correction 20 comprend une ligne principale sur laquelle sont montés en série, successivement, une résistance R1, un commutateur Q1, une résistance R2, le circuit de commande de découpage 10. Un condensateur C1 est relié, d'une part, à la ligne principale entre la résistance R1 et le commutateur Q1, et d'autre part, à la masse. Un commutateur Q2 est relié, d'une part, à la ligne principale entre la résistance R2 et le circuit de commande 10 et, d'autre part, à une résistance R3 également reliée à la masse. Un condensateur C2 est relié, d'une part, à la ligne principale entre la liaison au commutateur Q2 et le circuit de commande 10, et d'autre part, à la masse.

Le fonctionnement du circuit de correction s'exécute en trois phases :
- mesure de la valeur moyenne V2 (continue) du signal trapézoïdal V1 représentatif de la valeur moyenne du courant primaire au moyen de R1 et C1,
- production d'un signal triangulaire aux bornes de C2 par la charge du condensateur C2 avec une constante de temps τ=R2C2 à partir de la fermeture du commutateur Q1 (la tension V4 aux bornes de C2 est triangulaire),
- décharge du condensateur C2 avec une constante de temps τ=R3C2 à partir de la fermeture du commutateur Q2.

Le principe du convertisseur consiste à commander en modulation de largeur d'impulsion le commutateur de découpage Tl de manière à forcer le courant consommé à suivre une forme d'onde identique à celle de la tension à savoir une sinusoïde redressée double alternance. Pour ce faire, le signal issu du pont diviseur d'entrée, représentatif de la tension en sortie du circuit redresseur (sinusoïde redressée double alternance), est multiplié par un signal représentatif d'une tension d'erreur résultant de la comparaison de la tension du pont diviseur de sortie et d'une tension de référence. Le produit de ces signaux est un signal en forme de sinusoïde redressé double alternance dont l'amplitude dépend de l'erreur sur la tension de sortie. Ce signal est comparé, avec une hystérésis, à la tension image du courant consommé pour alimenter après temporisation la grille du commutateur de découpage T1.

Ainsi, à l'ouverture du commutateur de découpage T1, lorsque la tension est faible (tension de sortie inférieure à un seuil égal au produit de la tension d'entrée et du rapport de transformation, soit 1,5), l'énergie stockée dans le noyau magnétique du transformateur d'isolement 6 excite le deuxième enroulement secondaire 9 et est transmise vers la ligne de sortie 8 à travers la diode D2. Le fonctionnement du convertisseur s'apparente alors à celui d'un convertisseur du type FLYBACK.

Lorsque la tension de sortie a augmenté jusqu'à atteindre un seuil égal au produit de la tension d'entrée et du rapport de transformation, la diode D3 conduit et l'énergie du noyau magnétique est transférée vers la ligne de sortie par le premier enroulement 7, la diode D3 et la bobine de filtrage L1. Le fonctionnement du convertisseur s'apparente alors à celui d'un convertisseur de type FORWARD.

On est donc en présence d'un système auto-oscillant asservi sur l'amplitude de la tension d'erreur elle-même en forme de sinusoïde redressé double alternance, permettant d'obtenir une tension de sortie précise et un courant consommé sinusoïdal.

Le gain G de la chaîne de correction est réglé en fonction de la puissance de sortie souhaitée de sorte qu'une modification de la puissance de sortie souhaitée demandera une adaptation correspondante du gain.

Bien entendu, l'invention n'est pas limitée aux modes de réalisation décrits mais englobe toute variante entrant dans le champ de l'invention telle que définie par les revendications.

En particulier, le circuit de correction peut être modifié : les composants Q1 et R2 peuvent être intervertis sans que son fonctionnement soit changé. Il en est de même pour les composants Q2 et R3 qui peuvent eux aussi être intervertis.

## Revendications

1. Convertisseur alternatif / continu, comportant en entrée un circuit redresseur (2) raccordé en série à un enroulement primaire (5) d'un transformateur d'isolement (6) et à un commutateur de découpage (T1) piloté par un circuit de commande (10) par modulation de largeur d'impulsion à partir d'un signal représentatif d'un courant primaire, le transformateur d'isolement comprenant un premier enroulement secondaire (7) qui est de sens identique à l'enroulement primaire et qui est relié à une ligne de sortie (8) du convertisseur via une diode (D3,D6) et une bobine de filtrage (L1), et un deuxième enroulement secondaire (9) qui a un sens opposé à l'enroulement primaire et qui est relié directement à la ligne de sortie via une diode (D2), la ligne de sortie étant reliée à un condensateur de sortie (Cout), **caractérisé en ce que** le convertisseur comprend un circuit analogique de correction du courant primaire, qui est relié au circuit de commande et à un élément de mesure (30) fournissant un signal représentatif du courant primaire, et qui est agencé pour transformer ledit signal en un signal triangulaire apte au pilotage du circuit de commande.

2. Convertisseur selon la revendication 1, dans lequel le circuit analogique de correction (20) comprend une ligne principale sur laquelle sont montés en série, successivement, une première résistance (R1), un premier commutateur (Q1), une deuxième résistance (R2) et le circuit de commande (10), un premier condensateur (C1) étant relié, d'une part, à la ligne principale entre la première résistance (R1) et le premier commutateur (Q1) et, d'autre part, à la masse, un deuxième commutateur (Q2) étant relié, d'une part, à la ligne principale entre la deuxième résistance (R2) et le circuit de commande (10) et, d'autre part, à une troisième résistance (R3) également reliée à la masse, un deuxième condensateur (C2) étant relié, d'une part, à la ligne principale entre la liaison au deuxième commutateur (Q2) et le circuit de commande (10) et, d'autre part, à la masse.

## Patentansprüche

1. Wechselstrom-/Gleichstromwandler, umfassend als Eingang eine Gleichrichterschaltung (2), die in Serie mit einer Primärwicklung (5) eines Isolationstransformators (6) und einem Trennschalter (T1) verbunden ist, der von einem Steuerkreis (10) zur Steuerung durch Pulsbreitenmodulation ausgehend von einem Signal gesteuert wird, das repräsentativ für einen Primärstrom ist, wobei der Isolationstransformator eine erste Sekundärwicklung (7) umfasst, bei der die Wicklungsrichtung mit der jener Primärwicklung identisch ist, und die über eine Diode (D3, D6) und eine Filterspule (L1) mit einer Ausgangsleitung (8) des Wandlers verbunden ist, sowie eine zweite Sekundärwicklung (9), bei der die Wicklungsrichtung entgegengesetzt zu der jener Primarwicklung ist und die direkt über eine Diode (D2) mit der Ausgangsleitung verbunden ist, wobei die Ausgangsleitung mit einem Ausgangskondensator (Cout) verbunden ist, **dadurch gekennzeichnet, dass** der Wandler eine Analogschaltung zur Korrektur des Primärstroms umfasst, die mit dem Steuerkreis und einem Messelement (30) verbunden ist, das ein Signal liefert, das repräsentativ für den Primärstrom ist, und die so ausgebildet ist, dass sie das genannte Signal in ein Dreiecksignal umwandelt, das zur Steuerung des Steuerkreises geeignet ist.

2. Wandler nach Anspruch 1, wobei die Analogschaltung (20) zur Korrektur eine Hauptleitung umfasst, auf der nacheinander ein erster Widerstand (R1), ein erster Kommutator (Q1), ein zweiter Widerstand (R2) und der Steuerkreis (10) in Serie geschaltet sind, wobei ein erster Kondensator (C1) einerseits mit der Hauptleitung zwischen dem ersten Widerstand (R1) und dem ersten Kommutator (Q1) und andererseits mit Masse verbunden ist, wobei ein zweiter Kommutator (Q2) einerseits mit der Hauptleitung zwischen dem zweiten Widerstand (R2) und dem Steuerkreis (10) und andererseits mit einem dritten Widerstand (R3) verbunden ist, der ebenfalls mit Masse verbunden ist, wobei ein zweiter Kondensator (C2) einerseits mit der Hauptleitung zwischen der Verbindung mit dem zweiten Kommutator (Q2) und dem Steuerkreis (10) und andererseits mit Masse verbunden ist.

## Claims

1. An AC/DC converter comprising an input rectifier circuit (2) connected in series with a primary winding (5) of an isolating transformer (6) and to a chopper switch (T1) driven by a control circuit (10) using pulse width modulation on the basis of a signal representative of a primary current, the isolating transformer having a first secondary winding (7) that is wound in the same direction as the primary winding and that is connected to an output line (8) of the converter via a diode (D3,D6) and a filter coil (L1), and a second secondary winding (9) that is wound in the opposite direction to the primary winding and that is connected directly to the output line via a diode (D2), the output line being connected to an output capacitor (Cout), the converter being **characterized in that** it includes an analog correction circuit for correcting the primary current, which circuit is connected to the control circuit and to a measurement element (30) delivering a signal representative of the primary current, and is arranged to transform said signal into a triangular signal suitable for driving the control circuit.

2. A converter according to claim 1, wherein the analog correction circuit (20) comprises a main line having connected in series therein, in succession: a first resistor (R1); a first switch (Q1); a second resistor (R2) and the control circuit (10); there being a first capacitor (C1) connected firstly to the main line between the first resistor (R1) and the first switch (Q1) and secondly to ground; a second switch (Q2) connected firstly to the main line between the second resistor (R2) and the control circuit (10), and secondly to a third resistor (R3) that is also connected to ground; and a second capacitor (C2) connected firstly to the main line between the connection between the second switch (Q2) and the control circuit (10), and secondly to ground.
